# EUROPEAN PATENT SPECIFICATION

(11) **EP 1 889 403 B1**
(45) Date of publication and mention of the grant of the patent: **25.02.2015**
(21) Application number: 06784637.8
(22) Date of filing: 07.06.2006
(51) Int. Cl.: H04L 12/26, H04L 29/06, H04L 12/711, H04L 12/703, H04L 12/715, H04L 12/751, H04L 12/24, H04L 12/707

(54) **METHODS AND APPARATUS FOR ERROR RECOVERY IN OPAQUE NETWORKS USING ENCRYPTED ERROR LOCATIONS**
VERFAHREN UND VORRICHTUNG ZUR FEHLERBEHEBUNG IN OPAKEN NETZEN MITTELS VERSCHLÜSSELTER FEHLERORTUNG
PROCEDES ET DISPOSITIFS PERMETTANT LA REPRISE SUR INCIDENT DANS DES RESEAUX OPAQUES, PAR L'UTILISATION DE POSITIONS D'ERREURS CHIFFREES

(30) Priority: 07.06.2005 US 146520
(43) Date of publication of application: 20.02.2008
(73) Proprietor: Cisco Technology, Inc., San Jose, CA 95134 (US)
(72) Inventor: BRADFORD, Richard, Westford, Massachusetts 01886 (US); VASSEUR, Jean-Philippe, Dunstable, Massachusetts 01827 (US); GUICHARD, James, Groton, Massachusetts 01450 (US)
(74) Representative: Kazi, Ilya
(86) International application number: PCT/US2006/022130
(87) International publication number: WO 2006/133301

(56) References cited:
- US-A1- 2004 025 018
- US-A1- 2005 013 241
- DÄACHILLE ED (CORITEL) M LISTANTI (CORITEL) U MONACO ED (CORITEL) F RICCIATO (CORITEL) D ALI (CORITEL) V SHARMA (METANOIA A ET AL: "Diverse Inter-Region Path Setup/Establishment; draft-dachille-diverse-inter-region-path-s etup-01.txt" IETF STANDARD-WORKING-DRAFT, INTERNET ENGINEERING TASK FORCE, IETF, CH, no. 1, 1 October 2004 (2004-10-01), XP015037736 ISSN: 0000-0004
- ADRIAN FARREL OLDDOG CONSULTING JEAN-PHILIPPE VASSEUR CISCO SYSTEMS ET AL: "A Framework for Inter-Domain MPLS Traffic Engineering; draft-ietf-ccamp-inter-domain-framework-00 .txt" IETF STANDARD-WORKING-DRAFT, INTERNET ENGINEERING TASK FORCE, IETF, CH, vol. ccamp, 1 August 2004 (2004-08-01), XP015016623 ISSN: 0000-0004
- CY LEE ALCATEL A FARREL OLD DOG CONSULTING S DE CNODDER ALCATEL: "Exclude Routes - Extension to RSVP-TE; draft-ietf-ccamp-rsvp-te-exclu de-route-03.txt" IETF STANDARD-WORKING-DRAFT, INTERNET ENGINEERING TASK FORCE, IETF, CH, vol. ccamp, no. 3, 18 February 2005 (2005-02-18), XP015038151 ISSN: 0000-0004

## Description

### BACKGROUND

In modem data communications, data for an end-to-end network connection may be carried through two or more separate provider networks, each being owned and/or operated by a separate communications carrier. For example, a communications subscriber's data may travel through separate provider networks operated by AT&T and MCI. Such separate provider networks, or sub-networks as referred to herein, are capable of inter-operating in certain ways thanks to widely observed standards. However, each provider network is managed substantially independently, and information about the internal structure of each provider network is generally guarded with great care for reasons of business security and confidentiality. The sub-network operators expose the minimum information about network internals that is necessary to comply with pertinent interface standards. Networks including such separate sub-networks are herein termed "heterogeneous networks". The sub-networks themselves may be referred to as "opaque" networks due to the very limited information about the network internals that are available or "visible" outside the sub-networks.

There is a current trend toward increased use of so-called Multi-Protocol Label Switching (MPLS) techniques in wide-area networks such as the heterogeneous networks described above. MPLS enables the establishment of connections known as "label-switched paths" (LSPs) on which data may be exchanged by endpoint devices, such as switches and routers within endpoint networks for which the heterogeneous network provides wide-area communications. MPLS can be used in conjunction with signaling protocols such as Resource Reservation Protocol with Traffic Engineering extensions (RSVP-TE), which provides mechanisms for establishing, maintaining, and tearing down LSPs (which are also referred to herein as TE LSPs for "Traffic Engineering Label Switched Paths"). A recent variant of MPLS is known as Generalized MPLS or GMPLS.

One facet of operation of networks employing MPLS Traffic Engineering and other protocols is the identification and signaling of network failures and support for recovery from such failures. Using RSVP-TE, for example, it is possible for a network device that detects a failure to generate a Path Error message that identifies the location of the failure, and to send the Path Error message to a path-originating device that is responsible for maintaining the path. The path-originating device can respond to the Path Error message by attempting to set up a new communications path to replace the original path, which will in many cases have been torn down automatically upon occurrence of the failure. In a Path Setup message for the new path, the path-originating device may specify that the new path should avoid the location of the failure. Other devices within the network perform path calculations for the new path while observing this constraint as signaled by the path-originating device. Note that in this case the entire path is not computed by the path-originating device (also referred to as the "head-end" LSR (Label Switched Router)) but by several network devices along the path.

In heterogeneous networks, the interfaces between sub-networks of different providers, and the interfaces between sub-networks and endpoint (or user) networks, are well-specified in order to promote interoperability. The interface between sub-networks is referred to as a network-to-network interface or NNI, and the interface between a sub-network and an endpoint network is referred to as a user-to-network interface (UNI). One common set of NNI and UNI specifications in use are those promulgated by the Optical Internetworking Forum (OIF). In these specifications, there is a provision for identifying the location of a network failure by using certain messages and appropriate data fields thereof. An error message sent from one subnetwork to another may include no information in the pertinent fields, or may include an identification of only the edge-most device in the sub-network, in order to minimize the exposure of internal sub-network information as discussed above. More specific information about the location of a failure stays within the sub-network in which the failure occurred. From the perspective of external devices, such as those of a customer or another network provider on the other side of a UNI or NNI interface, there is little or no information about the specific location of the failure.

A mechanism for establishing end-to-end diverse label switched paths (LSPs) across multiple regions is disclosed in "Diverse Inter-Region Path Setup/Establishment", D'Achille et al., IETF, October 2004. Path setup failures can be signaled using a PATH-ERR message including the node(s) to exclude.

Farrel et al. "A Framework for Inter-Domain MPLS Traffic Engineering", IETF, August 2004, discloses a framework for establishing and controlling Multiprotocol Label Switching (MPLS) and Generalized MPLS (GMPLS) Label Switched Paths (LSPs) in multi-domain networks.

### SUMMARY

Aspects of the invention are set out in the independent claims. Certain preferred features are set out in the dependent claims.

One shortcoming of the above-described operation of heterogeneous networks is the inability of devices outside a sub-network containing a failure to make the best routing decisions for new communications paths to be established in response to the failure, due to the lack of detailed information about the location of the failure. Based on the limited information it has, an external device such as a path-originator may be forced to use a relatively expensive alternative path, or may erroneously conclude that no alternative path exists, when in fact the sub-network with the failure may itself be capable of providing part of a more attractive alternative path. Additionally, because of the lack of detailed failure information, logging errors at the external device is incomplete, and diagnosing problems in the heterogeneous network can be adversely affected. In some networks, third-party network managers are utilized to provide network management services across multiple provider networks of a heterogeneous network, and the operation of these networks can also be adversely affected by the lack of detailed failure information outside of each provider network.

In accordance with the present invention, methods and apparatus are disclosed for error recovery in heterogeneous networks in which it is desired to maintain the confidentiality of information about the internal structure and/or operation of sub-networks. In particular, methods and apparatus are disclosed for establishing a new communications path between two end devices in a computer network in response to failure of a previously established communications path between the two end devices, when the failure occurs in a sub-network at a failure location whose identity is not to be revealed to an external device outside the sub-network that is responsible for maintaining communications between the two end devices.

In response to the failure, the external device is signaled that the failure has occurred by a device within the sub-network having the failure, such as by a router adjacent to a failed communications link. The signaling includes an encoded identifier of the failure location that enables identification of the failure location within the sub-network while masking the identity of the failure location to the external device. In one embodiment, the failure location information is encrypted into an encrypted sub-object within a signaling message. In another embodiment, the signaling message includes a token that is associated with the failure location information, which remains stored within the sub-network.

In response to the signaling of the failure, the external device issues a path-establishment message for the new communications path. The path-establishment message indicates that the new communications path should exclude the failure location as identified by the encoded identifier, which is included in the path-establishment message. In the case of an encrypted sub-object, the encrypted sub-object is included as a corresponding sub-object of the path-establishment message. When the token approach is utilized, the token is included in the path-establishment message.

A device within the sub-network responds to the path-establishment message by determining whether a path segment for the new communications path can be provided through the sub-network while excluding the failure location as identified by the encoded identifier from the path-establishment message. This may involve decrypting the encrypted sub-object or retrieving stored failure location information based on the token included in the path-establishment message. Based on whether such a path segment can be provided, the device then proceeds accordingly with the path setup operation.

By using the encoded identifier, the external device is able to more precisely specify a failure location to be avoided when a new communications path is being set up, and can therefore avoid the above-discussed problems that arise from the lack of detailed failure location information. However, the detailed information about the failure location is encoded so as to be unavailable outside the sub-network, thus preserving such information in confidence as may be desired by network providers.

### BRIEF DESCRIPTION OF THE DRAWINGS

The foregoing and other objects, features and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.
Figure 1 is a block diagram of a heterogeneous network in accordance with the present invention;
Figure 2 is a diagram of the network of Figure 1 omitting internal structure of separate sub-networks, reflecting the information that is available outside the sub-networks;
Figure 3 is a flow diagram of a process by which the network of Figure 1 creates a new communications path in response to a failure on an existing communications path;
Figure 4 is a diagram of the network of Figure 1 illustrating the flow of messages resulting from the process of Figure 3;
Figure 5 is a diagram of a path error message with a private error location sub-object utilized in the process of Figure 3;
Figure 6 is a diagram of a path setup message with a private exclude location sub-object utilized in the process of Figure 3;
Figure 7 is a diagram illustrating a flow of messaging like that of Figure 4 but using a token as an encoded identifier of failure location information; and
Figure 8 is a diagram of a network like that of Figure 1 and including a third-party network manager.

### DETAILED DESCRIPTION

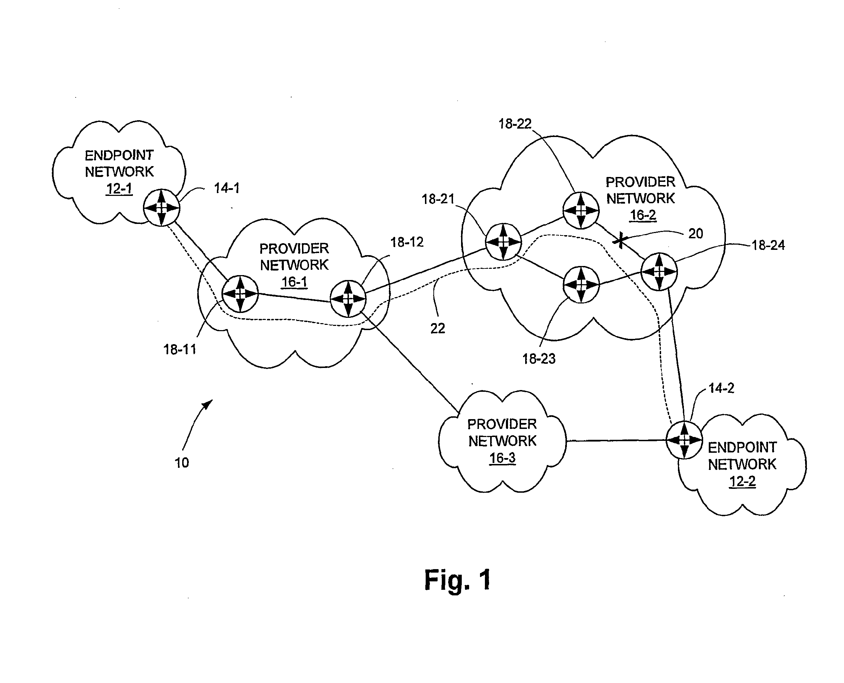

Figure 1 shows a simplified example of a heterogeneous network 10 providing communications between two endpoint networks 12-1 and 12-2. Within each endpoint network 12 is a respective edge device 14 (14-1 and 14-2) which is typically a switch or router providing ingress and/or egress routing of communications to/from the respective endpoint network 12. The heterogeneous network 10 includes a plurality of provider networks 16 (16-1, 16-2 and 16-3), which are also referred to herein as "sub-networks". The provider networks 16 are operated independently, such as by different communications carriers. For example, the provider networks 16-1, 16-2 and 16-3 might be operated by separate carriers such as AT&T, Sprint and MCI respectively.

Each provider network 16 includes a plurality of switches or routers 18 (18-11, 18-12 and 18-21 though 18-24), which may be IP routers or optical or time-division-multiplex (TDM) switches. Such devices are referred to generally herein as "routers". The routers 18 are responsible for establishing and maintaining communications paths for the transfer of data among endpoint devices such as the edge devices 14 of the endpoint networks 12. In one embodiment, the routers 18 are so-called "label switched routers" (LSRs) that utilize a switching technology referred to as Multi-Protocol Label Switching (MPLS) or Generalized Multi-Protocol Label Switching (GMPLS). In accordance with MPLS techniques, communications paths known as "traffic engineering label-switched paths" (TE LSPs) are established through the provider networks 16 as respective sets of entries in forwarding tables maintained in the routers 18. Each router 18 uses a label contained within each received communications message to retrieve a corresponding entry from its forwarding table that indicates which port of the router the message should be forwarded on. Each entry generally also includes another label that is used in the outgoing message in place of the label received with the incoming message. The functions of consulting the local forwarding table and forwarding the message accordingly are repeated at each router 18 to realize each communications path that has been established.

The TE LSPs used in the heterogeneous network 10 of Figure 1 are established in part through a control protocol such as Resource Reservation Protocol with Traffic Extensions (RSVP-TE). Among other things, RSVP-TE includes mechanisms for establishing and tearing down end-to-end communications paths. An endpoint such as an edge device 14 initiates the establishment of an end-to-end communications paths using known RSVP-TE signaling techniques. RSVP-TE signaling generally propagates hop-by-hop among routers 18 in the direction of the destination endpoint. For example, in the simplified example of Figure 1, the initial RSVP-TE signaling for establishing a communications path between the edge devices 14-1 and 14-2 may be initiated by edge device 14-1 and proceed to routers 18-11, 18-12, 18-21, 18-22 and 18-24 sequentially before reaching edge device 14-2. In such a case, RSVP-TE acknowledgments and response messages flow backwards along the same path to the edge device 14-1.

Although in the present description RSVP-TE is utilized as the signaling protocol, it is to be understood that RSVP-TE is provided as an illustrative example only and that in alternative embodiments other communication protocols may be used for the functions described herein, including the signaling of network failures as described below.

Figure 1 illustrates an operating condition in which a failure 20 has developed along a communications path 22 previously established between the edge devices 14. The failure 20 may be any of a variety of failure types that prevent normal communications between the routers 18-22 and 18-24. Common failures include failure of a hardware interface device on one of the routers 18-22 or 18-24 and failure of the inter-router communications link such as occurs when a cable is severed or accidentally disconnected.

It is assumed that routers 18 adjacent to the failure 20 detect the presence of the failure 20 and take actions to notify other devices in the network so that (1) any communications paths that are affected by the failure 20 can be re-routed if possible to restore communications, and (2) new communications paths avoid the failure 20. Many network routing protocols already provide for failure location information to be "flooded" so as to become known by all routing devices in the network for these purposes. Unfortunately, normal flooding mechanisms may be too slow. The requests for new paths may be re-tried several times while the information about the failure 20 is flooded throughout the network. If this mechanism is the only one relied upon for restoring communications, customers' communications may experience unacceptably long downtime.

In addition to the aforementioned flooding of failure location information, a router 18 may initiate the tearing down of a communications path along which a failure such as failure 20 has occurred. In the example of Figure 1, such a tearing down might be initiated, for example, by routers 18-22 and 18-24 which are adjacent to the failure 20. As part of the tearing down operation, the router 18-22 may create an RSVP-TE Path Error message and return it along the communications path 22 to the path originator (i.e., edge device 14-1 in the illustrated example). The RVSP Path Error message includes a set of data referred to as an ErrorSpec object that includes various information concerning the failure 20, such as the nature of the failure 20 and its location. The location may be specified, for example, by the network address of the router 18-22 and an identifier of the specific port on the router 18-22 connected to the communications link containing the failure 20. The purpose of the Path Error message is to quickly notify the path originator that a previously established MPLS communications path is no longer available. The path originator then has the opportunity to attempt to establish a new communications path so as to minimize the duration of the outage from the customer's perspective. Because of the directness of this signaling of failure information, recovery from the failure can usually be achieved more quickly than when the above-described flooding mechanism is relied upon.

Figure 1 shows all the routers 18 along the communications path 22 between the edge devices 14. In general, RSVP-TE operation reflects the same level of detail, i.e., each router 18 along a communications path may be informed via an RSVP-TE Path Error message of the precise location of a failure elsewhere in the network, even if it resides within a sub-network 16 operated by a different carrier. However, this relatively open aspect of RSVP-TE is inconsistent with the desire of communications carriers to avoid revealing the structure of their respective provider networks 16 to competitors or other untrusted entities. For example, the carrier operating provider network 16-2 may not wish to reveal the existence and connectivity of the router 18-22 that is adjacent to the failure 20. Thus, it is common for carriers in heterogeneous networks such as the network 10 to limit the information that is permitted to leave their respective sub-networks. For example, for RSVP-TE Path Error messages propagating from the provider network 16-2 to the provider network 16-1, the ErrorSpec object may identify a port of the egress router 18-21 as the failure location. This indication is accurate in a very general way - the failure 20 is in fact located at a point on the communications path 22 that is reached via the router 18-21. However, such an indication hides the internal details of the provider network 16-2 from the router 18-12 (of provider network 16-1) and other devices outside the provider network 16-2.

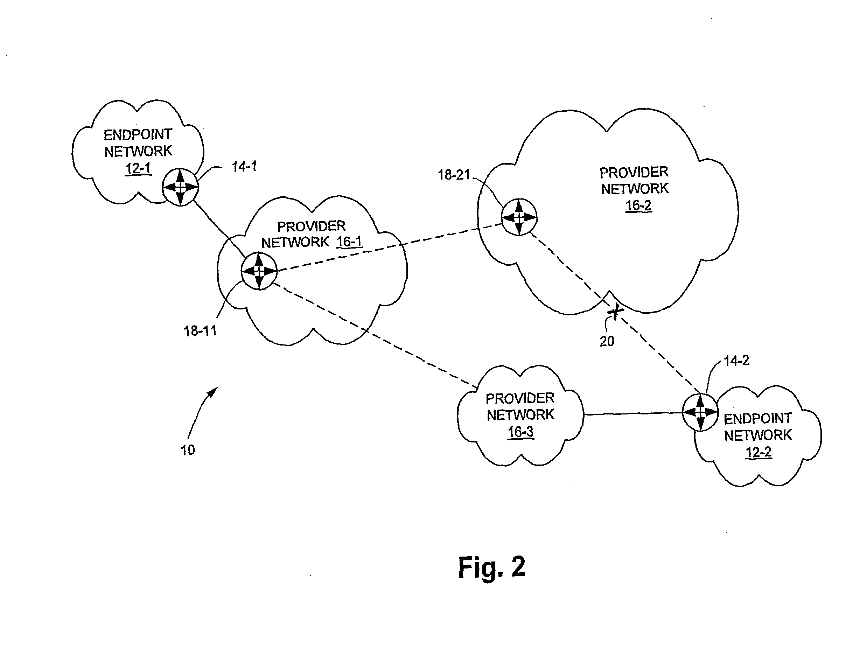

Figure 2 illustrates a view of the heterogeneous network 10 when the internal details of the sub-networks 16 are omitted. Dotted lines are used to indicate connections that are apparent at this level. This view of the network is that which results from the above-described limitation on information transfer across the provider networks 16. As an originator of communications paths, the edge device 14-1 sees only respective edge devices of the various provider networks 16-1, 16-2 and 16-3 (e.g., routers 18-11 and 18-21 as shown). With respect to the failure 20, the edge device 14-1 knows only that it lies on the far side of router 18-21, somewhere between that router and the edge device 14-2. In some cases, visibility of routers located at domain exits may also be provided.

The limited network view depicted in Figure 2 can cause significant operational problems. To begin with, any error logging performed by the edge device 14-1 will lack important detail about the locations of failures in the network, rendering the logs much less useful for later use in diagnosing network problems. When a provider network 16 has only one point of ingress, such as for provider network 16-2, the path-originating edge device 14-1 may opt to completely bypass that provider network on a subsequent attempt to establish a new communications path. For example, the edge device 14-1 may opt to route the new path through the sub-network 16-3. Such an approach would be logical if the failure 20 actually occurred immediately adjacent to the router 18-21, as is indicated by the Path Error message. However, when the failure has actually occurred more deeply within the provider network such that an alternative communications path may exist within the provider network (as is the case for provider network 16-2 in Figure 1), it would be more desirable that the new communications path be routed within that same provider network along the alternative path. From the perspective of the operator of the provider network having the failure, it avoids losing customer revenue. Additionally, in some cases such an alternative path may be either the only alternative path or the most economical path, and if it is not utilized then the edge device 14-1 may either select a less economical path or incorrectly conclude that the destination edge device 14-2 has become unreachable. These are all undesirable operating scenarios.

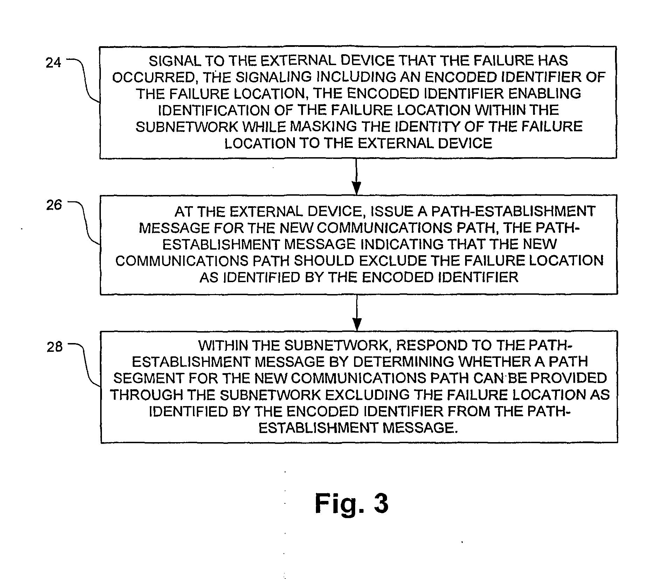

Figure 3 illustrates a process carried out in the heterogeneous network 10 by which a new communications path is established between the two devices in response to the failure of an original communications path. This process can be executed, for example, in the heterogeneous network 10 of Figure 1 in response to the failure 20 along the communications path 22 between the edge devices 14. Overall, this process involves signaling the failure to the originating edge device (e.g. edge device 14-1) in a way that prevents devices outside the provider network 16-2 from obtaining information about the location of the failure 20 within the provider network 16-2. The failure information is utilized in connection with a subsequent new path setup operation by which a replacement communications path may be routed through the same provider network 16-2 if desired, while avoiding the location of the failure 20. In Figure 3, the originating device is referred to as the "external device" because it resides outside the sub-network (e.g. provider network 16-2) in which the failure is detected.

In step 24, the occurrence of the failure is signaled to the external device. This signaling might be initiated, for example, by a router adjacent to the failure such as the router 18-22 in Figure 1. The signaling message includes an encoded identifier of the failure location. The encoded identifier enables the failure location to be identified within the sub-network where the failure occurred (e.g., within provider network 16-2) but masks the identity of the failure location to the external device. Examples of such encoded identifiers include encrypted data objects and "tokens" as described in more detail below.

In step 26, the external device that receives the failure signaling (e.g. edge device 14-1) issues a new path-establishment message for a new communications path. The path-establishment message indicates that the new communications path should exclude the failure location, as identified by the encoded identifier which is included with the path-establishment message. Mechanisms for providing such indications in the context of RSVP-TE in particular are described below. This path-establishment message can be sent into the sub-network containing the failure on the possibility that an alternative path through the sub-network can be created.

In step 28, a device within the sub-network containing the failure responds to the path-establishment message by determining whether a path segment through the sub-network can be provided that excludes the failure location as identified by the encoded identifier in the path-establishment message. In one embodiment, this step includes decrypting the encrypted identifier of the failure location, and then performing normal path-computation operations with the constraint of excluding the identified failure location. This operation may be carried out, for example, by an edge router such as the router 18-21. The remainder of the normal path setup process then ensues with respect to the new communications path.

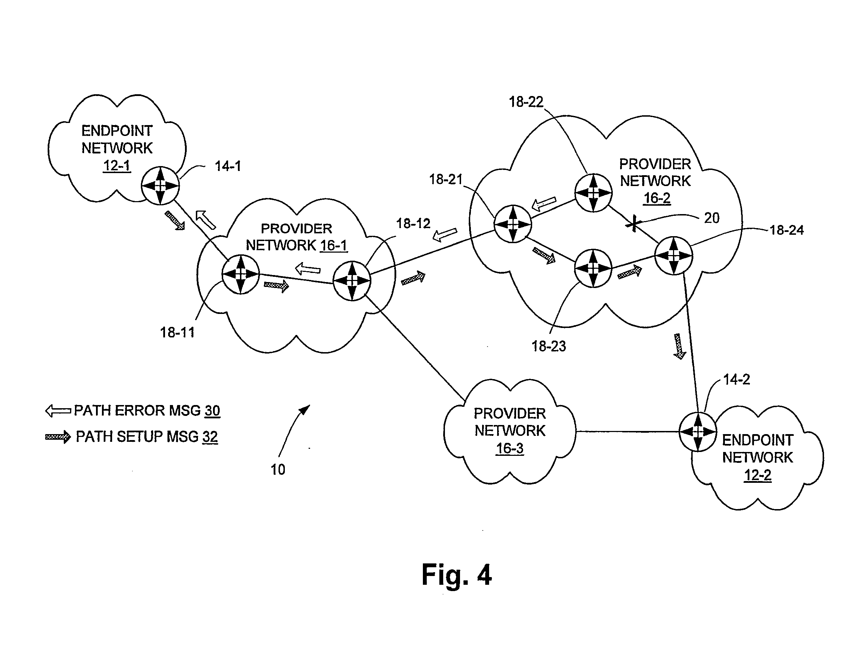

In an RSVP-TE environment, the messaging of steps 24 and 26 can be carried out using Path Error and Path Setup messages. Figure 4 shows the flow of the RSVP-TE messages, with the Path Error messages 30 indicated by white arrows and the Path Setup messages 32 being indicated by dark arrows. As shown, the Path Error messages 30 originate at router 18-22 and proceed toward the edge device 14-1. The Path Setup messages 32 originate at the edge device 14-1 and proceed to the other edge device 14-2, passing through routers 18-21, 18-23 and 18-24 and bypassing router 18-22 (and failure 20) in provider network 16-2.

As mentioned above, the signaling of the fault location 20 can be accomplished using an RSVP-TE Path Error message. Per the RSVP-TE specification, each Path Error message may include an ErrorSpec object that is used to provide information about the location of the failure. However, in a heterogeneous network such as network 10, the ErrorSpec object will normally be used to hold the address of the edge router of the sub-network where the failure occurred (e.g. router 18-21) as described above. Thus, an extension is proposed for RSVP-TE by which the Path Error message includes a "private error location" sub-object that includes the encoded identifier of the actual failure location within the sub-network.

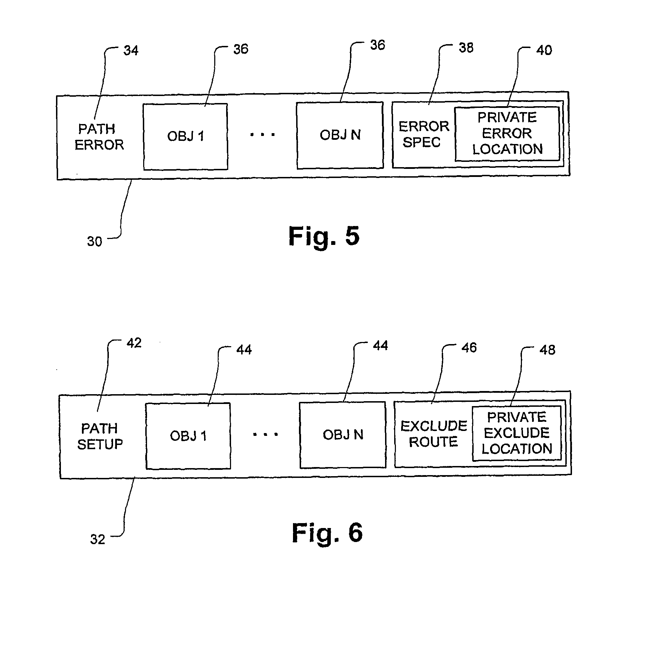

Figure 5 illustrates an RSVP-TE Path Error message 30 with the proposed extension. The message is identified with a Path Error message type 34. The message may contain one or more objects 36 that provide information about the failure. Included among these objects 36 is the above-referenced ErrorSpec object 38. A Private Error Location sub-object 40 is included as part of the ErrorSpec object 38. The Private Error Location sub-object 40 contains an encoded identifier of the failure location 20, such as by node address or path segment identifier. The encoding is done in a manner known within the provider network 16-2 but generally not known outside the provider network 16-2. For example, the failure location information may be encrypted using any of a variety of known encryption techniques, including for example the Advanced Encryption Standard (AES) and Data Encryption Standard (DES), both promulgated by the National Institute of Standards and Technology. Only devices within the provider network 16-2 are configured with keys that are suitable for decrypting the encrypted information. The encrypted Private Error Location sub-object 40 does not reveal any details of the structure of the provider network 16-2 when passed outside the provider network 16-2 as part of a Path Error message. It is only when the sub-object 40 is sent back into the provider network 16-2 as part of a subsequent Path Setup message that the encrypted information can be recovered and utilized.

Figure 6 illustrates an RSVP-TE Path Setup message 32 with a proposed extension to enable the system to make use of the private error location information returned as part of a Path Error message 30. The message is identified with a Path Setup message type 42. The message may contain one or more objects 44 including an ExcludeRoute object 46. A Private Exclude Location sub-object 48 is included as part of the ExcludeRoute object 38. The Private Exclude Location sub-object 48 contains the same encoded identifier of the failure location 20 that was provided to the path originator (e.g. edge device 14-1) in a preceding Path Error message 30, such as described above. As also described above, this encoded identifier can be decoded and used by routers 18 within the provider network 16-2 in making path computations for the new path to be established. In particular, the failure location identified in the ExcludeRoute object 46 is used to constrain the path computation to those path segments within the provider network 16-2 (if any) that do not include the failure location 20. When encryption has been used to generate the Private Error Location sub-object 40, the ExcludeRoute object 46 is decrypted using the appropriate decryption key.

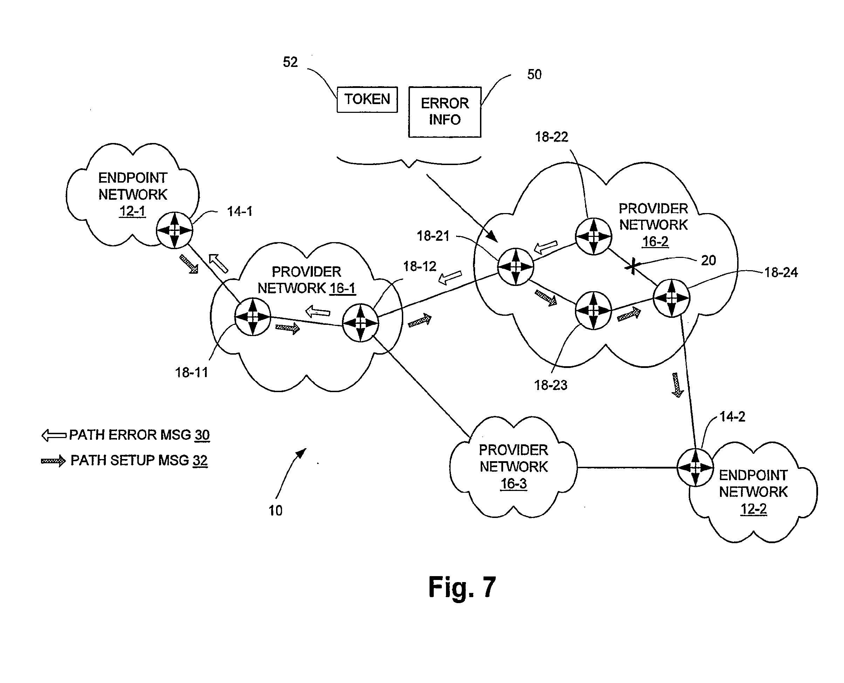

Figure 7 illustrates an alternative approach to encoding the error information identifying the failure location 20. The edge router 18-21 creates an error information data object (ERROR INFO) 50 using the information from the internal Path Error message (e.g., from the router 18-22). This information is stored in association with a token 52 that serves as an arbitrary identifier of the error information data object 50. The token 52 may be generated in any of a variety of ways, including random generation, selection from a pool, or a hashing/message-digest approach. The token 52 is then included in the Private Error Location sub-object 40 of the Path Error message sent by the router 18-21 outside the provide network 16-2.

When the originating device (e.g. router 14-1) generates a new Path Setup message, it includes the token 52 in the Private Exclude Object 48. A router 18 within the provider network 16-2 that receives the Path Setup message (e.g. router 18-21) uses the token from the Private Exclude Object 48 to look up the locally stored error information data object 50, and then uses the failure location information in that object in its path computations for the newly requested path.

It will be appreciated that the Path Setup message for the new communications path may not be received at the same edge router 18 that emitted the Path Error message from the provider network 16-2. When the above-described encryption method issued, this situation is automatically handled correctly as long as the decryption key has been distributed to all routers 18 that might receive the Path Setup message. When the token approach of Figure 7 is utilized, it is necessary to provide the error information data object 50 and the token 52 to any router 18 that can or actually does receive the Path Setup message. The data may be distributed by a flooding/broadcast process initiated by the router (e.g. router 18-21) that has created the information. As an alternative, a request/response protocol may be employed such that any router 18 within the provider network 16-2 can request the data (i.e., error information data object 50 and token 52) from another router, such as router 18-21. Using this approach, a router 18 receiving the Path Setup message with an accompanying token 52 issues a request for the associated error information data object 50. Upon receiving a response to this request, the requesting router 18 can perform its path computations in a known manner.

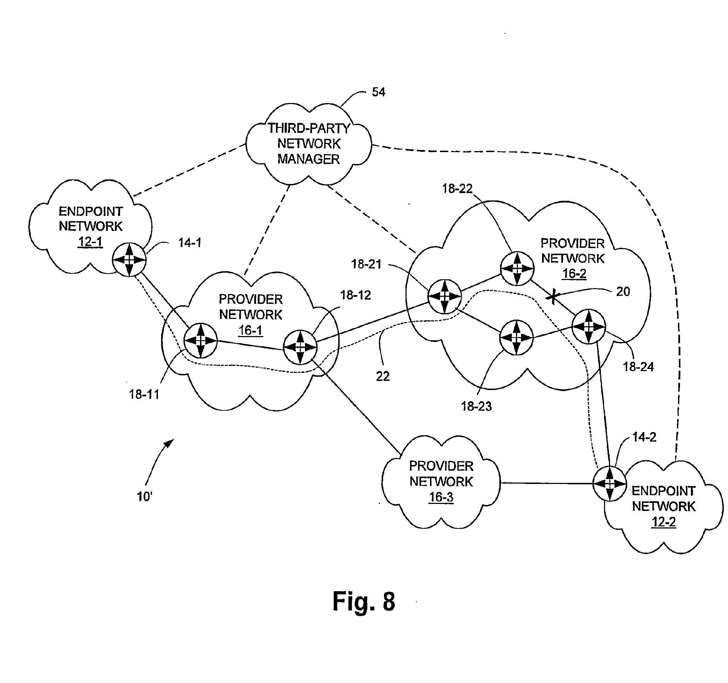

Figure 8 illustrates a heterogeneous network 10' in which a third-party network manager 54 is utilized in providing network services to the endpoint networks 12. In this configuration, the third-party network manager 54 may be trusted by the respective carriers owning/operating the provider networks 16. However, if the standard network-network interface is used, each edge router 18 (e.g. edge router 18-21) will still replace any detailed failure location information in the ErrorSpec object with its own address information, leaving the third-party network manager 54 with insufficient information to make the best choices for creating new communications paths. To enable the third-party network manager 54 to obtain such information, the third-party network manager 54 can be provided with the information necessary to decode the encoded failure location information in the Path Error messages. For example, the third-party network manager 54 can be provided with a decryption key when the encrypted Private Error Location sub-object 40 is utilized. In an embodiment utilizing the token approach of Figure 7, the error information data object 50 and token 52 are sent to the third-party network manager 54, either unsolicited or on request as described above with respect to Figure 7.

In the above description, the signaling for communications path failures and for new communications paths to be established is described as following generally the same paths as the communications paths themselves, which can be typical in an RSVP-TE environment for example. However, in alternative embodiments the signaling may travel different paths or may travel through an entirely separate network that may be dedicated to signaling. In such alternative embodiments, any signaling entities can be seen as extensions of and included within their respective sub-networks for purposes of the presently disclosed techniques. Thus, a signaling entity that operates on behalf of provider network 16-2, for example, will generally have access to the same information and perform the same signaling functions as described above for router 18-21, i.e., generating either an encrypted Private Error Location sub-object 40 or token 52, decrypting an encrypted Private Exclude Error sub-object 48, etc.

The techniques described herein can be used in a hierarchical or nested manner. For example, provider network 16-2 of Figure 4 might use another provider network between routers 18-22 and 18-24. When a failure occurs in such a network, the network can use the disclosed techniques to provide an error location as an encrypted Private Error Location sub-object. Then, network 16-2 can wrap that object within its own Private Error Location sub-object and forward it backward along the LSP as described above. These sub-objects are both returned in a subsequent Path Setup message, and each is recovered by the respective network. The token technique may be utilized in a similar way.

While this invention has been particularly shown and described with references to preferred embodiments thereof, it will be understood by those skilled in the art that various changes in form and details may be made therein without departing from the scope of the invention as defined by the appended claims.

## Claims

1. A method of establishing a new communications path between two end devices in a heterogeneous network which includes a plurality of sub-networks in response to failure of a previously established communications path between the two end devices, the failure occurring in a sub-network at a failure location whose identity is not to be revealed to an external device outside the sub-network responsible for maintaining communications between the two end devices, the method comprising:
signalling to the external device that the failure has occurred, the signalling including an encoded identifier of the failure location, the encoded identifier enabling identification of the failure location within the sub-network while masking the identity of the failure location to the external device;
at the external device, issuing a path-establishment message for the new communications path, the path-establishment message indicating that the new communications path should exclude the failure location as identified by the encoded identifier; and
within the sub-network, responding to the path-establishment message by determining whether a path segment for the new communications path can be provided through the sub-network excluding the failure location as identified by the encoded identifier from the path-establishment message.

2. A method according to claim 1, wherein the external device is an edge device in an endpoint network in which the previously established communications path and the new communications path terminate.

3. A method according to claim 1, wherein signalling the occurrence of the failure comprises sending a path error message to the external device from a device adjacent the failure location.

4. A method according to claim 1, wherein the encoded identifier comprises a data object encrypted according to an encryption technique, the encryption technique employing a decryption key that is provided to devices within the sub-network but not to the external device, the encrypted data object accompanying the path-establishment message, and wherein responding to the path-establishment message within the subnetwork comprises decrypting the encrypted data object from the path-establishment message.

5. A method according to claim 4, wherein the decrypting of the encrypted data object is carried out by an ingress edge device in the sub-network.

6. A method according to claim 1, wherein the encoded identifier comprises a token associated with an error information data object stored within the sub-network, the token accompanying the path-establishment message, and wherein responding to the path- establishment message within the sub-network comprises retrieving the stored error information data object based on the token from the path-establishment message.

7. A method according to claim 6, wherein the error information data object is provided to devices in the sub-network in an unsolicited manner for potential use in responding to the path-establishment message.

8. A method according to claim 6, wherein the error information data object is provided to a device in the sub-network in response to a request generated by the device upon receiving the path-establishment message.

9. A method according to claim 1, wherein the sub-network is a first sub-network nested within a second sub-network, and wherein signalling the occurrence of the failure comprises wrapping the encoded identifier within an error sub-object of the second subnetwork, and further comprising recovering the error sub-object from the path- establishment message in the second sub-network to provide the encoded identifier to the first sub-network.

10. A network device for use in a heterogeneous network which includes a plurality of sub-networks including a sub-network, the sub-network being operative to provide a path segment of a previously established communications path for two end devices, the sub-network being operative to signal to the network device which is external to the sub-network that a failure has occurred within the sub-network, the failure occurring in the sub-network at a failure location whose identity is not to be revealed to the network device, the network device being responsible for maintaining communications between the two end devices and being configured to:
receive the failure signalling from the sub-network, the failure signalling including an encoded identifier of the failure location, the encoded identifier enabling identification of the failure location within the sub-network while masking the identity of the failure location to the network device; and
issue a path-establishment message for a new communications path between the two end devices, the path-establishment message including the encoded identifier from the failure signalling and indicating that the new communications path should exclude the failure location as identified by the encoded identifier.

11. A network device according to claim 10, wherein the network device is an edge device in an endpoint network in which the previously established communications path and the new communications path terminate.

12. A network device for use in a sub-network of a heterogeneous network which includes a plurality of sub-networks, the subnetwork providing a path segment of a previously established communications path for two end devices, the network device being configured to:
signal to an external device outside the sub-network that a failure has occurred within the sub-network, the failure occurring in the sub-network at a failure location whose identity is not to be revealed to the external device, the signalling including an encoded identifier of the failure location, the encoded identifier enabling identification of the failure location within the sub-network while masking the identity of the failure location to the external device; and
in response to a path-establishment message from the external device indicating that a new communications path should exclude the failure location as identified by the encoded identifier, determining whether a path segment for the new communications path can be provided through the sub-network excluding the failure location as identified by the encoded identifier from the path-establishment message.

13. A network device according to claim 12, wherein the network device is adjacent to the failure location and is operative when signalling the occurrence of the failure to send a path error message to the external device.

14. A network device according to claim 12, wherein the encoded identifier comprises a data object encrypted according to an encryption technique, the encryption technique employing a decryption key that is provided to devices within the sub-network but not to the external device, the encrypted data object accompanying the path-establishment message, and wherein the network device is operative when responding to the path-establishment message to decrypt the encrypted data object from the path-establishment message.

15. A network device according to claim 14, wherein the network device is an ingress edge device in the sub-network.

16. A network device according to claim 12, wherein the encoded identifier comprises a token associated with an error information data object stored within the subnetwork, the token accompanying the path-establishment message, and wherein the network device is operative when responding to the path-establishment message to retrieve the stored error information data object based on the token from the path-establishment message.

17. A network device according to claim 16, wherein the error information data object is provided to the network device in an unsolicited manner for potential use in responding to the path-establishment message.

18. A network device according to claim 16, wherein the error information data object is provided to the network device in response to a request generated by the network device upon receiving the path-establishment message.

19. A heterogeneous network which includes a plurality of sub-networks, comprising:
a sub-network through which a previously established communications path for two end devices extends, the sub-network including a network device according to any of claims 12 to 18; and
an external device outside the sub-network responsible for maintaining communications between the two end devices, the external device comprising a network device as claimed in claim 10 or 11.

20. A heterogeneous network according to claim 19, wherein the sub-network is a first sub-network nested within a second sub-network, the second sub-network being operative to wrap the encoded identifier within an error sub-object provided to the external device, the second sub-network being further operative to recover the error sub-object from the path-establishment message and provide the encoded identifier to the first sub-network.

## Patentansprüche

1. Verfahren zum Einrichten eines neuen Kommunikationspfads zwischen zwei Endgeräten in einem heterogenen Netzwerk, das eine Vielzahl von Unternetzwerken umfasst, als Reaktion auf den Ausfall eines zuvor eingerichteten Kommunikationspfads zwischen den beiden Endgeräten, wobei der Ausfall in einem Unternetzwerk an einer Ausfallstelle auftritt, deren Identität einer externen Vorrichtung außerhalb des Unternetzwerks nicht enthüllt werden soll, die zur Aufrechterhaltung der Kommunikation zwischen den beiden Endgeräten verantwortlich ist, wobei das Verfahren Folgendes umfasst:
Signalisieren der externen Vorrichtung, das der Ausfall aufgetreten ist, wobei die Signalisierung einen codierten Identifikator der Ausfallstelle umfasst, wobei der codierte Identifikator die Identifizierung der Ausfallstelle innerhalb des Unternetzwerks ermöglicht, während die Identität der Ausfallstelle für die externe Vorrichtung maskiert wird;
an der externen Vorrichtung, Ausgeben einer Pfadeinrichtungsnachricht für den neuen Kommunikationspfad, wobei die Pfadeinrichtungsnachricht anzeigt, dass der neue Kommunikationspfad die Ausfallstelle ausschließen sollte, die von dem codierten Identifikator identifiziert wurde; und
innerhalb des Unternetzwerks, reagieren auf die Pfadeinrichtungsnachricht, indem ermittelt wird, ob ein Pfadsegment für den neuen Kommunikationspfad durch das Unternetzwerk unter Ausschluss der Ausfallstelle bereitgestellt werden kann, die von dem codierten Identifikator aus der Pfadeinrichtungsnachricht identifiziert wurde.

2. Verfahren nach Anspruch 1, wobei die externe Vorrichtung eine Randvorrichtung in einem Endpunktnetzwerk ist, bei der der zuvor festgelegte Kommunikationspfad und der neue Kommunikationspfad enden.

3. Verfahren nach Anspruch 1, wobei das Signalisieren des Auftretens des Ausfalls das Senden einer Pfadfehlernachricht von einer Vorrichtung benachbart zur Ausfallstelle zu der externen Vorrichtung umfasst.

4. Verfahren nach Anspruch 1, wobei der codierte Identifikator ein Datenobjekt umfasst, das gemäß einem Verschlüsselungsverfahren verschlüsselt ist, wobei das Verschlüsselungsverfahren einen Entschlüsselungsschlüssel verwendet, der Vorrichtungen innerhalb des Unternetzwerks jedoch nicht der externen Vorrichtung bereitgestellt wird, wobei das verschlüsselte Datenobjekt der Pfadeinrichtungsnachricht beigefügt ist, und wobei das Reagieren auf die Pfadeinrichtungsnachricht in dem Unternetzwerk das Entschlüsseln des verschlüsselten Datenobjekts aus der Pfadeinrichtungsnachricht umfasst.

5. Verfahren nach Anspruch 4, wobei das Entschlüsseln des verschlüsselten Datenobjekts von einer Eintrittsrandvorrichtung in dem Unternetzwerk durchgeführt wird.

6. Verfahren nach Anspruch 1, wobei der codierte Identifikator einen Token umfasst, der einem Fehlerinformationsdatenobjekt zugeordnet ist, das ist in dem Unternetzwerk gespeichert ist, wobei der Token die Pfadeinrichtungsnachricht begleitet, und wobei das Reagieren auf die Pfadeinrichtungsnachricht innerhalb des Unternetzwerks das Abrufen des gespeicherten Fehlerinformationsdatenobjekts basierend auf dem Token aus der Pfadeinrichtungsnachricht umfasst.

7. Verfahren nach Anspruch 6, wobei das Fehlerinformationsdatenobjekt Vorrichtungen in dem Unternetzwerk in einer nicht angeforderten Weise zur möglichen Verwendung bei der Reaktion auf die Pfadeinrichtungsnachricht bereitgestellt wird.

8. Verfahren nach Anspruch 6, wobei das Fehlerinformationsdatenobjekt einer Vorrichtung in dem Unternetzwerk als Reaktion auf eine Anfrage bereitgestellt wird, die von der Vorrichtung nach Empfang der Pfadeinrichtungsnachricht erzeugt wird.

9. Verfahren nach Anspruch 1, wobei das Unternetzwerk ein erstes Unternetzwerk ist, das in einem zweiten Unternetzwerk verschachtelt ist, und wobei das Signalisieren des Auftretens des Ausfalls das Einwickeln des codierten Identifikators in ein Fehlerunterobjekt des zweiten Unternetzwerks umfasst, wobei das Verfahren weiterhin die Rückgewinnung des Ausfallunterobjekts aus der Pfadeinrichtungsnachricht in dem zweiten Unternetzwerk umfasst, um den codierten Identifikator dem ersten Unternetzwerk bereitzustellen.

10. Netzwerkvorrichtung zur Verwendung in einem heterogenen Netzwerk, das eine Vielzahl von Unternetzwerken umfasst, die ein Unternetzwerk umfassen, wobei das Unternetzwerk ein Pfadsegment eines zuvor festgelegten Kommunikationspfads für zwei Endgeräte bereitstellen kann, wobei das Unternetzwerk der Netzwerkvorrichtung, die extern von dem Unternetzwerk ist, signalisieren kann, dass ein Ausfall in dem Unternetzwerk stattgefunden hat, wobei der Ausfall in dem Unternetzwerk an einer Ausfallstelle auftritt, deren Identität der Netzwerkvorrichtung nicht enthüllt werden soll, wobei die Netzwerkvorrichtung für die Aufrechterhaltung der Kommunikation zwischen den beiden Endgeräten verantwortlich ist und für Folgendes konfiguriert ist:
Empfangen der Ausfallsignalisierung von dem Unternetzwerk, wobei die Ausfallsignalisierung einen codierten Identifikator der Ausfallstelle umfasst, wobei der codierte Identifikator die Identifizierung der Ausfallstelle innerhalb des Unternetzwerks ermöglicht, während die Identität der Ausfallstelle für die Netzwerkvorrichtung maskiert wird, und
Ausgeben einer Pfadeinrichtungsnachricht für einen neuen Kommunikationspfad zwischen den beiden Endgeräten, wobei die Pfadeinrichtungsnachricht den codierten Identifikator aus der Ausfallsignalisierung umfasst und anzeigt, dass der neue Kommunikationspfad die Ausfallstelle ausschließen sollte, die von dem codierten Identifikator identifiziert wurde.

11. Netzwerkvorrichtung nach Anspruch 10, wobei die Netzwerkvorrichtung eine Randvorrichtung in einem Endpunktnetzwerk ist, bei der der zuvor festgelegte Kommunikationspfad und der neue Kommunikationspfad enden.

12. Netzwerkvorrichtung zur Verwendung in einem Unternetzwerk eines heterogenen Netzwerks, das eine Vielzahl von Unternetzwerken umfasst, wobei das Unternetzwerk ein Pfadsegment eines zuvor festgelegten Kommunikationspfads für zwei Endgeräte bereitstellt, wobei die Netzwerkvorrichtung für Folgendes konfiguriert ist:
Signalisieren einer externen Vorrichtung außerhalb des Unternetzwerks, dass ein Ausfall in dem Unternetzwerk stattgefunden hat, wobei der Ausfall in dem Unternetzwerk an einer Ausfallstelle auftritt, deren Identität der externen Vorrichtung nicht enthüllt werden soll; wobei die Signalisierung einen codierten Identifikator der Ausfallstelle umfasst, wobei der codierte Identifikator die Identifizierung der Ausfallstelle innerhalb des Unternetzwerks ermöglicht, während die Identität der Ausfallstelle für die externe Vorrichtung maskiert wird; und
als Reaktion auf eine Pfadeinrichtungsnachricht von der externen Vorrichtung, Anzeigen dass ein neuer Kommunikationspfad die Ausfallstelle ausschließen sollte, die von dem codierten Identifikator identifiziert wird, Ermitteln, ob ein Pfadsegment für den neuen Kommunikationspfad durch das Unternetzwerk unter Ausschluss der Ausfallstelle bereitgestellt werden kann, die von dem codierten Identifikator aus der Pfadeinrichtungsnachricht identifiziert wurde.

13. Netzwerkvorrichtung nach Anspruch 12, wobei die Netzwerkvorrichtung benachbart zu der Ausfallstelle angeordnet ist und in der Lage ist, bei Signalisierung des Auftretens des Ausfalls eine Pfadfehlernachricht zu der externen Vorrichtung zu senden.

14. Netzwerkvorrichtung nach Anspruch 12, wobei der codierte Identifikator ein Datenobjekt umfasst, das gemäß einem Verschlüsselungsverfahren verschlüsselt ist, wobei das Verschlüsselungsverfahren einen Entschlüsselungsschlüssel verwendet, der Vorrichtungen innerhalb des Unternetzwerks jedoch nicht der externen Vorrichtung bereitgestellt wird, wobei das verschlüsselte Datenobjekt der Pfadeinrichtungsnachricht beigefügt ist, und wobei die Netzwerkvorrichtung bei der Reaktion auf die Pfadeinrichtungsnachricht das verschlüsselte Datenobjekt von der Pfadeinrichtungsnachricht entschlüsseln kann.

15. Netzwerkvorrichtung nach Anspruch 14, wobei die Netzwerkvorrichtung eine Eintrittsrandvorrichtung in dem Unternetzwerk ist.

16. Netzwerkvorrichtung nach Anspruch 12, wobei der codierte Identifikator einen Token umfasst, der einem Fehlerinformationsdatenobjekt zugeordnet ist, das ist in dem Unternetzwerk gespeichert ist, wobei der Token die Pfadeinrichtungsnachricht begleitet, und wobei die Netzwerkvorrichtung bei der Reaktion auf die Pfadeinrichtungsnachricht das gespeicherte Fehlerinformationsdatenobjekt basierend auf dem Token von der Pfadeinrichtungsnachricht abrufen kann.

17. Netzwerkvorrichtung nach Anspruch 16, wobei das Fehlerinformationsdatenobjekt der Netzwerkvorrichtung in einer nicht angeforderten Weise zur möglichen Verwendung bei der Reaktion auf die Pfadeinrichtungsnachricht bereitgestellt wird.

18. Netzwerkvorrichtung nach Anspruch 16, wobei das Fehlerinformationsdatenobjekt der Netzwerkvorrichtung als Reaktion auf eine Anfrage bereitgestellt wird, die von der Netzwerkvorrichtung nach Empfang der Pfadeinrichtungsnachricht erzeugt wird.

19. Heterogenes Netzwerk, das eine Vielzahl von Unternetzwerken umfasst, die Folgendes umfassen:
ein Unternetzwerk durch das sich ein zuvor festgelegter Kommunikationspfad für zwei Endgeräte erstreckt, wobei das Unternetzwerk eine Netzwerkvorrichtung nach einem der Ansprüche 12 bis 18 umfasst; und
eine externe Vorrichtung außerhalb des Unternetzwerks, die zur Aufrechterhaltung der Kommunikation zwischen den beiden Endgeräten verantwortlich ist, wobei die externe Vorrichtung eine Netzwerkvorrichtung nach Anspruch 10 oder 11 umfasst.

20. Heterogenes Netzwerk nach Anspruch 19, wobei das Unternetzwerk ein erstes Unternetzwerk ist, das in einem zweiten Unternetzwerk verschachtelt ist, wobei das zweite Unternetzwerk den codierten Identifikator in ein Fehlerunterobjekt einwickelt, das der externen Vorrichtung bereitgestellt ist, wobei das zweite Unternetzwerk ferner das Fehlerunterobjekt aus der Pfadeinrichtungsnachricht zurückgewinnen und den codierten Identifikator dem ersten Unternetzwerk bereitstellen kann.

## Revendications

1. Procédé destiné à établir un nouveau trajet de communications entre deux dispositifs terminaux dans un réseau hétérogène, qui inclut une pluralité de sous-réseaux, en réaction à une défaillance d'un trajet de communications ayant été établi antérieurement entre les deux dispositifs terminaux, la défaillance se produisant dans un sous-réseau au niveau d'un emplacement de défaillance dont l'identité ne doit pas être révélée à un dispositif externe à l'extérieur du sous-réseau qui est chargé de maintenir des communications entre les deux dispositifs terminaux, le procédé comprenant les opérations consistant à :
signaler au dispositif externe que la défaillance s'est produite, la signalisation incluant un identifiant codé de l'emplacement de la défaillance, l'identifiant codé permettant d'identifier l'emplacement de la défaillance au sein du sous-réseau tout en masquant l'identité de l'emplacement de la défaillance au dispositif externe ;
au niveau du dispositif externe, émettre un message d'établissement de trajet pour le nouveau trajet de communications, le message d'établissement de trajet indiquant que le nouveau trajet de communications devrait exclure l'emplacement de la défaillance tel qu'il a été identifié par l'identifiant codé ; et
au sein du sous-réseau, réagir au message d'établissement de trajet en déterminant si un segment de trajet pour le nouveau trajet de communications peut être fourni à travers le sous-réseau, à l'exclusion de l'emplacement de la défaillance tel qu'il a été identifié par l'identifiant codé à partir du message d'établissement de trajet.

2. Procédé selon la revendication 1, le dispositif externe étant un dispositif de frontière dans un réseau à points de terminaison dans lequel se terminent le trajet de communications ayant été établi antérieurement et le nouveau trajet de communications.

3. Procédé selon la revendication 1, la signalisation de l'occurrence de la défaillance comprenant l'opération consistant à envoyer un message d'erreur de trajet au dispositif externe à partir d'un dispositif situé en position adjacente à l'emplacement de la défaillance.

4. Procédé selon la revendication 1, l'identifiant codé comprenant un objet de données crypté conformément à une technique de cryptage, la technique de cryptage faisant intervenir une clé de décryptage qui est fournie à des dispositifs au sein du sous-réseau mais pas au dispositif externe, l'objet de données crypté accompagnant le message d'établissement de trajet, et cas dans lequel l'opération consistant à réagir au message d'établissement de trajet au sein du sous-réseau comprend le décryptage de l'objet de données crypté à partir du message d'établissement de trajet.

5. Procédé selon la revendication 4, le décryptage de l'objet de données crypté étant réalisé par un dispositif de frontière d'entrée dans le sous-réseau.

6. Procédé selon la revendication 1, l'identifiant codé comprenant un jeton lequel est associé à un objet de données d'informations d'erreur stocké au sein du sous-réseau, le jeton accompagnant le message d'établissement de trajet, et cas dans lequel l'opération consistant à réagir au message d'établissement de trajet au sein du sous-réseau comprend la récupération de l'objet de données d'informations d'erreur stocké, sur la base du jeton, à partir du message d'établissement de trajet.

7. Procédé selon la revendication 6, l'objet de données d'informations d'erreur étant fourni à des dispositifs dans le sous-réseau de manière non sollicitée, en vue d'une utilisation potentielle lors de la réaction au message d'établissement de trajet.

8. Procédé selon la revendication 6, l'objet de données d'informations d'erreur étant fourni à un dispositif dans le sous-réseau, en réaction à une demande générée par le dispositif après avoir reçu le message d'établissement de trajet.

9. Procédé selon la revendication 1, le sous-réseau étant un premier sous-réseau imbriqué au sein d'un deuxième sous-réseau, et cas dans lequel la signalisation de l'occurrence de la défaillance comprend l'opération consistant à envelopper l'identifiant codé à l'intérieur d'un sous-objet d'erreur du deuxième sous-réseau, et comprenant en outre l'opération consistant à récupérer le sous-objet d'erreur à partir du message d'établissement de trajet dans le deuxième sous-réseau afin de fournir l'identifiant codé au premier sous-réseau.

10. Dispositif de réseau destiné à être utilisé dans un réseau hétérogène, qui inclut une pluralité de sous-réseaux, incluant un sous-réseau, le sous-réseau fonctionnant de façon à signaler au dispositif de réseau, qui est extérieur au sous-réseau, qu'une défaillance s'est produite au sein du sous-réseau, la défaillance se produisant dans le sous-réseau au niveau d'un emplacement de défaillance dont l'identité ne doit pas être révélée au dispositif de réseau, le dispositif de réseau étant chargé de maintenir des communications entre les deux dispositifs terminaux et étant configuré de façon à :
recevoir la signalisation de la défaillance à partir du sous-réseau, la signalisation de la défaillance incluant un identifiant codé de l'emplacement de la défaillance, l'identifiant codé permettant d'identifier l'emplacement de la défaillance au sein du sous-réseau tout en masquant l'identité de l'emplacement de la défaillance au dispositif de réseau ; et
émettre un message d'établissement de trajet pour un nouveau trajet de communications entre les deux dispositifs terminaux, le message d'établissement de trajet incluant l'identifiant codé en provenance de la signalisation de défaillance et indiquant que le nouveau trajet de communications devrait exclure l'emplacement de la défaillance tel qu'il a été identifié par l'identifiant codé.

11. Dispositif de réseau selon la revendication 10, le dispositif de réseau étant un dispositif de frontière dans un réseau à points de terminaison dans lequel se terminent le trajet de communications ayant été établi antérieurement et le nouveau trajet de communications.

12. Dispositif de réseau destiné à être utilisé dans un sous-réseau d'un réseau hétérogène, qui inclut une pluralité de sous-réseaux, le sous-réseau fournissant un segment de trajet pour un trajet de communications ayant été établi antérieurement pour deux dispositifs terminaux, le dispositif de réseau étant configuré de façon à :
signaler à un dispositif de externe, qui est extérieur au sous-réseau, qu'une défaillance s'est produite au sein du sous-réseau, la défaillance se produisant dans le sous-réseau au niveau d'un emplacement de défaillance dont l'identité ne doit pas être révélée au dispositif externe, la signalisation incluant un identifiant codé de l'emplacement de la défaillance, l'identifiant codé permettant d'identifier l'emplacement de la défaillance au sein du sous-réseau tout en masquant l'identité de l'emplacement de la défaillance au dispositif externe ; et
en réaction à un message d'établissement de trajet en provenance du dispositif externe indiquant qu'un nouveau trajet de communications devrait exclure l'emplacement de la défaillance tel qu'il a été identifié par l'identifiant codé, déterminer si un segment de trajet pour le nouveau trajet de communications peut être fourni à travers le sous-réseau, à l'exclusion de l'emplacement de la défaillance tel qu'il a été identifié par l'identifiant codé à partir du message d'établissement de trajet.

13. Dispositif de réseau selon la revendication 12, le dispositif de réseau étant situé en position adjacente à l'emplacement de la défaillance, et fonctionnant lors de la signalisation de l'occurrence de la défaillance pour envoyer un message d'erreur de trajet au dispositif externe.

14. Dispositif de réseau selon la revendication 12, l'identifiant codé comprenant un objet de données crypté conformément à une technique de cryptage, la technique de cryptage faisant intervenir une clé de décryptage qui est fournie à des dispositifs au sein du sous-réseau mais pas au dispositif externe, l'objet de données crypté accompagnant le message d'établissement de trajet, et cas dans lequel le dispositif de réseau fonctionne lors de l'opération consistant à réagir au message d'établissement de trajet pour décrypter l'objet de données crypté à partir du message d'établissement de trajet.

15. Dispositif de réseau selon la revendication 14, le dispositif de réseau étant un dispositif de frontière d'entrée dans le sous-réseau.

16. Dispositif de réseau selon la revendication 12, l'identifiant codé comprenant un jeton lequel est associé à un objet de données d'informations d'erreur stocké au sein du sous-réseau, le jeton accompagnant le message d'établissement de trajet, et cas dans lequel le dispositif de réseau fonctionne lors de l'opération consistant à réagir au message d'établissement de trajet pour récupérer l'objet de données d'informations d'erreur stocké, sur la base du jeton, à partir du message d'établissement de trajet.

17. Dispositif de réseau selon la revendication 16, l'objet de données d'informations d'erreur étant fourni au dispositif de réseau de manière non sollicitée, en vue d'une utilisation potentielle lors de la réaction au message d'établissement de trajet.

18. Dispositif de réseau selon la revendication 16, l'objet de données d'informations d'erreur étant fourni au dispositif de réseau, en réaction à une demande générée par le dispositif de réseau après avoir reçu le message d'établissement de trajet.

19. Réseau hétérogène, qui inclut une pluralité de sous-réseaux, comprenant :
un sous-réseau à travers lequel s'étend un trajet de communications ayant été établi antérieurement pour deux dispositifs terminaux, le sous-réseau incluant un dispositif de réseau selon l'une quelconque des revendications 12 à 18 ; et
un dispositif externe à l'extérieur du sous-réseau chargé de maintenir des communications entre les deux dispositifs terminaux, le dispositif externe comprenant un dispositif de réseau selon la revendication 10 ou 11.

20. Réseau hétérogène selon la revendication 19, le sous-réseau étant un premier sous-réseau imbriqué au sein d'un deuxième sous-réseau, le deuxième sous-réseau fonctionnant de façon à envelopper l'identifiant codé à l'intérieur d'un sous-objet d'erreur fourni au dispositif externe, le deuxième sous-réseau fonctionnant en outre de façon à récupérer le sous-objet d'erreur à partir du message d'établissement de trajet et à fournir l'identifiant codé au premier sous-réseau.
